# EUROPEAN PATENT SPECIFICATION

(11) **EP 3 095 731 B1**
(45) Date of publication and mention of the grant of the patent: **30.03.2022**
(21) Application number: 16001088.0
(22) Date of filing: 05.12.2012
(51) Int. Cl.: B65D 83/38, B65D 83/42, B65D 83/64, B65D 83/62

(54) **PLASTIC CONTAINER FOR PACKAGING OF FILLING PRODUCT UNDER PRESSURE AND METHOD FOR THE MANUFACTURE THEREOF**
KUNSTSTOFFBEHÄLTER ZUM VERPACKEN VON FÜLLGUT UNTER DRUCK UND VERFAHREN ZUR HERSTELLUNG DAVON
RÉCIPIENT EN MATIÈRE PLASTIQUE POUR L'EMBALLAGE DE PRODUIT DE REMPLISSAGE SOUS PRESSION ET SON PROCÉDÉ DE FABRICATION

(30) Priority: 05.12.2011 BE 201100705; 10.10.2012 BE 201200681
(43) Date of publication of application: 23.11.2016
(62) Divisional of application: 12850745.6
(73) Proprietor: TRADIDEC NV, 9070 Destelbergen (BE)
(72) Inventor: De Cuyper, Dirk, 9070 Destelbergen (BE); Dierickx, William, 9070 Destelbergen (BE)
(74) Representative: Eeckhaoudt, Sabine Maria A.

(56) References cited:
- EP-A2- 0 778 225
- WO-A2-2004/065217
- DE-A1-102006 004 120
- US-A- 2 766 072

## Description

### Field of the invention

The present invention relates to a double container system of the bottle-in-bottle type which is intended for the packaging under pressure of a filling product, in particular liquid or semi-liquid, especially fluids, i.e. liquids or gases, such as pastes, creams, gels and the like, wherein the pressure container has a reinforced body.

### Background of the invention

Plastic pressure containers reveal some advantages compared with those made from metal, i.a. respective environment and durability, owing to a lower cost in energy and transport, resulting in a reduced CO₂ emission. Moreover, they are non-corrosive, have a lower weight and may be transparent if required. Conversely, however, they may get slightly deformed under the action of pressure, which is not desired in most cases.

As a result, pressure containers made from plastic bodies, resp. walls are restricted to allowable pressures, which they must be able to resist indeed, in order to ensure safe working. In order to cope with possible incidents resulting from the acting pressure, pressure containers were first proposed with a relatively thick wall, resulting in both a higher weight and a higher cost for such containers.

To remedy this, a reinforced container was proposed as disclosed in US 3 837 527 of KUTIC, wherein a container is described which has a body with a thinner wall thanks to a reinforced construction thereof. It consists essentially in a reinforcing ribs pattern which is rather complex. This consists of a set of radial reinforcing ribs indeed, which extend over the major part of the length of the container between an outer wall and an additional inner wall. This has the disadvantage however that the gain achieved in terms of weight of the outer wall thanks to its thinner design is counterbalanced by the additional material required for the additional inner wall and the numerous radial reinforcing ribs. The pressure container described herein consists of a highly complex wall structure in which a double wall is joined by radial ribs. The result is that the container thus obtained has virtually the same weight, with the additional disadvantage of a rather extensive and complex reinforcing rib structure.

### State of the art

Document US 3,327,907 of Charles MEYERS likewise describes a reinforced plastic container for products under pressure. Similarly, the reinforcement elements described herein consist of a set of longitudinally aligned reinforcing ribs. However, the presented container remains unable to achieve the material reduction which is sought here, essentially of the wall. Similarly, such longitudinal ribs do not contribute significantly to counteracting sufficiently the deformation of the body wall under the influence of the pressure action.

Similarly, document WO2005/071306 of KOLDYBAEV describes a pressure container made from semi-transparent composite material around which a more complex cage structure is fixed, which actually increases the overall weight and is therefore incompatible with the objective sought here. Thus, this pressure container makes use of an external cage which protects the pressure container against external influences. However, the cage does not increase the internal pressure resistance of the container, so that no contribution is provided to the presently sought solution of the technical problem.

The device described in DE 102006004120 of HYDAC Technology is not a packaging, but a hydraulic accumulator, which has a totally different function. DE 102006004120 discloses a bag-in-bottle type of system. The bladder/bag, which is of an elastic material, changes its shape under the influence of pressure. The outer container 14 is attached to part 15, but not to part 36 to which the bladder is attached.

Document FR 2 852 301 of VALOIS SAS also describes a pressure container which is nowhere equipped with mechanical reinforcements. It essentially involves a pressure container made from high-quality plastic material with sufficient resistance to the propellant gas which is intended to prevent the known disadvantages of metal containers, i.e. basically the difficulty to obtain specific shapes of containers at reasonable prices and also with regard to environmental considerations, as well as the possible impact on the contents of the container.

The pressure container described in US. 2.799.435 of ABPLANALP is made only from nylon. However, nylon is not suitable as a material for a pressure container, due to the significant moisture absorption and hydrolysis sensitivity. This is therefore restricted entirely to a nylon container in which a number of characterising technical specifications are described which are specific to the use of this material: this allows relatively thin walls, which are able nevertheless to resist the high pressures that are applied in pressure containers, but which has the disadvantage of quickly hardening, actually so quickly that nylon which is added in liquid form into the cavity has a tendency to solidify before the cavity is completely filled, with the drawback that the end products thus achieved are incomplete or imperfect. Said restrictions will not or must not occur in the present invention.

The pressure container described in US 5.133.701 of Han Sang is not provided anywhere with reinforcements, which are, however, necessary in order to provide the required resistance on the container wall that is subjected to a higher pressure.

Although EP 0778225 of L'OREAL describes an aerosol container that is also specifically intended for samples, the plastic pressure container is usable only for small volumes up to 8 ml as stated therein. A container made of plastic is thus proposed which is, however, regarded therein as an extremely expensive solution. At any rate, it is indicated herein that, due to the high internal pressure caused by the propellant gas, the use of a greater plastic thickness is required in order to allow the wall concerned to be provided with the required rigidity, thus providing an argument against this choice of plastic.

Finally, US 6.484.900 of Roy STINER et al. describes a transparent container intended for liquefied gas fuel, but the use of pressures is not disclosed at all therein. So this document does not cover a pressure container. A number of structural elements are described therein yet, which can best be used for the disclosed container, which is intended specifically as an energy source for a so-called 'camping gas' with an intrinsic and potential risk of explosion. Consequently, this container must be perfectly resistant to the high-risk contents comprising an explosive fluid, whereas in the applications considered here, only edible materials, cosmetics and other non-explosive fluids or discontinuous filling products notably are envisaged, and at any rate fluids which do not entail any risk of explosion. The basic conditions imposed on the container wall are thus totally different, which in the present case, is a determining factor given that, according to the present development, the aim is simply to be able to reduce the thickness of the body of the container as far as possible.

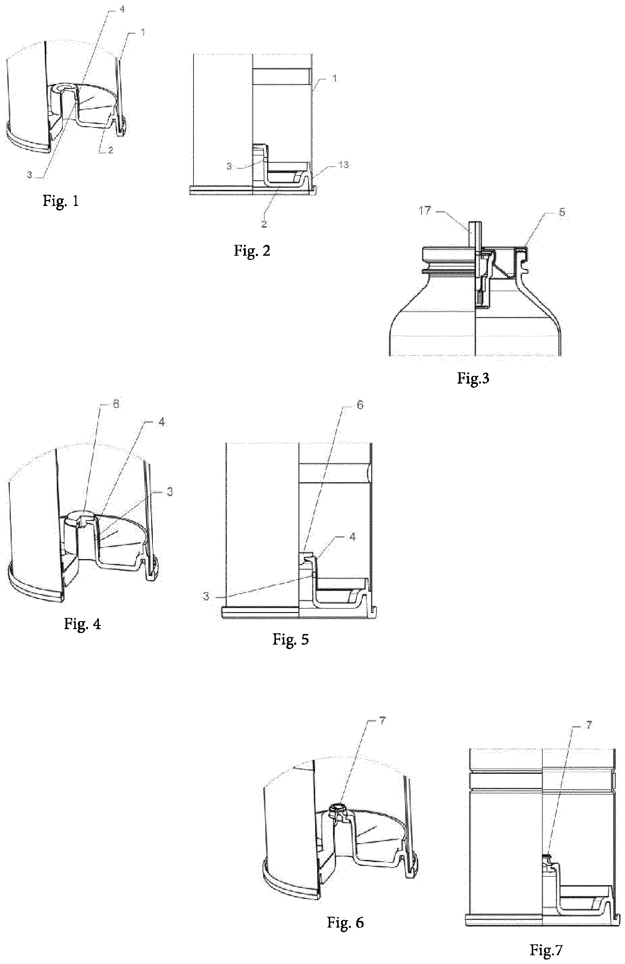

US 2,766,072 discloses a double container system for a pressure packaging, which is of a bottle-in-bottle type. In Fig. 1 a first bottle 10 with separate bottom part 13 is visible. Inside the first bottle is a second bottle 12. The first container is under atmospheric pressure. This follows from the holes in the separate bottom part. This system is not arranged such that the first container can be provided under a pressure which is higher than atmospheric pressure; and two bottom parts are used.

WO 2004/065217 relates to bag-in-bottle type containers with integral base. In Fig. 1 is disclosed a two-compartment container 3, 6, with a stretchable balloon B in the product chamber 3 and a pressure control device in the high-pressure chamber 6 provided underneath product chamber 3.To summarise, the need therefore exists for a lighter plastic container for pressure packaging, which is intended for packaging a continuous filling product, i.e. fluids such as gases or liquids with a continuous character, possibly semi-liquid, or also discontinuous fluids such as foam, pastes, creams, gels and even powders and the like, to be expelled after the exertion of a pressing action on the container. There exist such containers made from plastic polymer, comprising at least one end opening on the top side of a mantle forming the body of the container that is closable at the top with a closure of the cap type.

### Purpose of the invention

The object of the invention consists in pressurising the plastic container acting as packaging with filling product, notably from atmosphere to about 50 bar and more, up to pressures rising to approx. 100 bar or possibly even higher to 300 bar.

### Summary of the invention

To achieve this aim, a double container system of the bottle-in-bottle type made from plastic polymer is proposed according to this invention, as defined in the main claim.

In the invention, a container made from plastic polymer is proposed thus as defined in the relevant claim, which is remarkable in that an inner container is provided in this container. Thus by means of such a double container system according to an embodiment of the invention, a particularly advantageous application consists in making a pressure packaging in an inner bottle, withstanding pressures ranging from 20 to 50 bar and more, possibly up to 100 bar, or even to 300 bar, so that, if a problem occurs within the container, the outer container will absorb everything, thereby acting as a kind of safety container.

In a quite remarkable embodiment of the invention, Pascal's law is applied, stating that a pressure exerted on a liquid present in a completely filled and enclosed vessel will be transmitted undiminished in all directions. This law is applied here to a pressure container comprising an inner container, wherein the outer container completely encloses the inner container as an actual global outer container. If the inner container is placed under a high pressure and the outer container under a lower pressure, wherein both pressures are higher than atmospheric pressure, then the residual pressure on the inner container is equal to the difference between the high pressure of the inner container minus the lower (counter-)pressure of the outer container. This has the advantage that the inner container can be designed as lighter than would normally be expected to withstand the high pressure. Thanks to the constantly building counter-pressure in the outer container, the inner container can be designed as additionally thin and light.

The purpose of incorporating said inner container may also advantageously consist in the creation of a so-called 'counter-container', on the understanding that a negative pressure is created in relation to the other container, i.e. the outer container. So, a pressure-controlling device thus constituting a pressure regulator is created. In this two-container system, the inner container is placed under pressure, wherein two different pressures are controlled for both containers.

In an embodiment of the invention, a reinforcement is implemented by incorporating an inner container which in turn is attached with a joint to the bottom, wherein this inner container under internal pressure is additionally supported by the container, wherein said inner container is joined to the latter by gluing or welding. The rings can be fixed by gluing or welding. One of the applications may thus consist in making a pressure packaging in an inner container being operational up to 20 bar, and even more, by means of a double container system, resulting in that the outer container acting as a fuse container, will take up anything going wrong within the former container.

In an embodiment of the invention, a reinforcement is achieved by inserting an inner container which in turn is attached with a joint to the base, wherein this inner container being under internal pressure is additionally supported by the container, wherein these are joined to said container by gluing or welding, possibly without a joint. The rings can be attached by gluing or welding. Thus, one of the applications can consist in making a pressure packaging from a bottle in an inner bottle, withstanding pressures ranging to 20 bar and even more, so that, if a problem occurs within the container, the outer container will absorb everything, thereby acting as a kind of safety container.

According to a preferred embodiment of the invention, a set of specific reinforcement elements is provided which are placed at a distance from one another in order to make the container resistant to even higher internal pressures. By providing a set of reinforcement elements which are disposed at a mutual distance on the respectively inside and/or outside of the pressure container, these can be made resistant to increasingly higher internal pressures.

In particular, said reinforcement elements are obtained by winding and/or shrinking the film around the container. More particularly, said reinforcement elements comprise a set of inner support rings which are joined to the container.

According to a particular embodiment thereof, said reinforcement elements consist of a set of thickenings respectively reinforcement ribs directly in the wall of the container. According to a particular embodiment, said reinforcing elements consist of a set of outer support rings, which advantageously can be directly fixed during the container blowing process. According to a particular embodiment of the invention, said outer support rings can be replaced by a mesh and/or a grid and/or a shrink film with the grid already incorporated therein.

According to a specific embodiment thereof, said outer support rings are made of metal, wherein said outer or inner support rings can also be made from plastics.

According to a further advantageous embodiment of the pressure container according to the invention, one or both of the inner respectively outer containers is made transparent.

According to an advantageous embodiment of the invention, said plastic comprises PET (polyethylene terephthalate). However, it may also comprise different plastics such as polyolefins, polyesters, PETG, PBT, etc. With an appropriate selection of plastics, unsuitable deformations can be more effectively kept under control. Materials which appropriately come into consideration consist of a different plastic, or polyolefins, particularly polypropylene or polyethylene, polystyrene, polyesters such as PETG or PBT, polycarbonate, polyamides and the like, or copolymers thereof, with the additional advantage that the material can be adapted to the requirements of the product, in particular a higher pressure resistance, possibly a higher chemical resistance, a higher temperature resistance, which makes an even more favourable contribution to an improved solution to the problem mentioned before. Various materials are thus proposed, providing a chemical reinforcement, which may advantageously be combined with said physical reinforcement, resulting in a measurable increase in the mantle strength.

The pressure container according to the invention, comprises two end openings, on the top and bottom section of a mantle which forms the body of the container, the bottom section of which is closed by a separately added base which is attached to the body of the container by means of a joint and which is closed on top with a closure.

Another limitation is that they reveal creeping in the case of long-term stress on the plastic. However, this can be substantially remedied by a suitable selection of the plastics.

According to a further advantageous embodiment of the invention, the container originates from a preform made from a primary plastic material which is formed by a material which is bi-axially stretchable, particularly PET, more particularly, this is coated from the inside and, possibly, also from the outside, particularly with acrylics, possibly for the sake of using PET.

More particularly, it consists of a plastic, i.e. modified PET, such that it is resistant to an increasingly high(er) pressure and/or temperature.

According to a particular embodiment of the invention, said plastic is a so-called 'polymer bio-aggregate' referred to as "PBA", particularly with the incorporation of a barrier herein, more particularly PETG with incorporated spores. Polymer bio-aggregates of this type are obtained through bio-encapsulation in a polymer matrix, particularly applicable in the manufacturing process of an industrial product such as packaging material, textile fibres, granules and the like, where specific life stages and the polymer are agglomerated within a short time gap during which the polymer is fluid, i.e. at a temperature above its melting point.

A container according to a particular embodiment of the invention is provided with an end opening and is not cut off at the bottom.

In an embodiment of the invention, a valve is incorporated into the added base of the container packaging.

According to a particular embodiment of the invention, said joint comprises a glue joint, possibly also a seam joint or also a weld joint. More specifically, the weld joint may comprise a laser, induction or ultrasound joint.

According to a particular embodiment of the container of the invention, it is made from a preform and it is intended to contain radiation-sensitive products, such as light-sensitive and/or gas-sensitive products, particularly cosmetics, detergents and the like, and it is made up of at least one base layer comprising a primary plastic base material with a specific quantity of additives which are incorporated into said base layer, which preform is remarkable in that it has thermal properties which are such that the thermal contraction thereof does not exceed a specific setting value at a predetermined setting value of the operating temperature, particularly wherein said contraction setting value amounts to a maximum of 4% to 5%, particularly a maximum of 3,5%, preferably up to 1 %.

In particular, said primary base layer comprises a certain amount of primary additives between 1% and 20%, particularly between 5 and 15%, more particularly approximately 10% by weight, with the formation of a so-called blend, in order to protect the inside thereof against external radiation, particularly electromagnetic radiation, more particularly light, more particularly wherein the additives are formed by polymer additives, particularly thermoplastic polymer additives, possibly also by polycarbonate with the formation of a polycarbonate blend, or by PEN, PETN05, or even by polypropylene or PET additives; with the additional advantage that the material can best be adapted to the requirements of the product, such as a higher pressure resistance, a higher chemical resistance, a higher temperature resistance.

The preform may have a single-layer structure, possibly also a multi-layer structure, particularly a three-layer structure comprising said primary base layer, wherein an intermediate layer is incorporated which acts as a barrier layer, more particularly as a light and/or oxygen barrier, which is made up of a secondary plastic material by which virtually all transmitted light and/or oxygen can be blocked.

According to another embodiment of the invention, a gas barrier is incorporated into one of the layers, particularly the intermediate layer, of the wall comprising a barrier material with relevant gas absorption; in particular a gas barrier is incorporated into one of the layers, in particular the intermediate layer of the barrier comprising barrier material with relevant gas absorption; and/orwherein the additives have a neutralising effect on reagents with a disadvantageous influence on a product contained in the container with the formation of an active or passive barrier in the wall; and/or wherein the additives have a neutralising effect on gas formation originating from a degradation of said product with the formation of a relevant gas barrier in the wall; and/or wherein the additives have a neutralising effect on external substances, in particular oxygen and/or carbon dioxide, with the formation of a relevant gas barrier in the wall; and/or wherein an oxygen barrier is incorporated into the container wall respectively preform wall by replacing the PET in one or more layers with a polyester barrier with oxygen absorption.

According to a particular embodiment of the invention, the pressure packaging is formed by a multi-chamber system comprising at least two chambers. In the case of such a two-chamber system, the container is closed at the bottom as defined in the relevant sub-claim, and a chamber partition is fixed to create the different chambers in the container. In this case, the chamber partition can be provided with at least one pressure control valve respectively gassing valve. In particular, this pressure control valve may be a closure which can be indirectly opened from outside using the pressure control valve, so that the contents of the one chamber can come into contact with the other chamber, wherein the chambers may be under pressure or not, possibly wherein both the bottom and top sections are closed by means of the same closing piece, notably a closure, particularly wherein said cover consists of a dosing valve, or possibly a screw cap or other closures.

According to a particularly advantageous embodiment of the invention, the pressure container comprises a combined implementation of a double container as described above on the one hand, and a multiple chamber system on the other hand.

This invention also relates to a method for manufacturing a pressure container packaging as specified above, wherein the container used herein is made by a one-step process with subsequent cutting of the container in order thus to obtain a tube, wherein pressure means are fixed therein to pressurise the container packaging with the filling product, particularly from atmosphere to approx. 20 bar and more, possibly up to 100 bar, through gassing. The container can also be formed by a two-step process. The container can be formed directly by injection moulding, without cutting. It can still be cut afterwards.

According to a particular embodiment of the method of the invention, a flexible inner container or bag is inserted into the container to prevent the filling product from coming into contact with the outer wall and with the pressure gas (gases, air), particularly wherein a flexible inner container is inserted into the container by blowing.

The pressurisation therein can be performed through the closable lower valve via an opening which is self-closable by means of the seal, wherein this seal consists of a tube element which is made from a flexible plastic, particularly wherein the pressurisation therein can take place via the closable upper valve, notably via a so-called "umbrella plug" which is self-closable, or via a so-called "Nichelson plug".

According to a more particular embodiment of the method of the invention, the container is made from plastics by stretching and blowing an injection moulding preform which has a high crystallinity in order to have a higher thermal dimensional stability, wherein said crystallinity substantially forms an orientation-induced crystallinity, particularly wherein the crystallinity is higher than 30%, more particularly between 35 and 40 %.

More particularly, said container is made from a PET blend or copolymer with a different polyester resistant to a greater heat, particularly according to an extreme low level thereof, more particularly wherein said polyester is formed by a polyethylene naphthalate; a polytrimethylene naphthalate; or by the plastic material known as PETN-5 type 400105.

Further particularities and features of the invention are defined in further dependent claims. Further details are shown in the following examples for some features of the invention with reference to the attached drawings. The same reference signs refer to identical or analogous elements herein.

### Brief description of the drawings

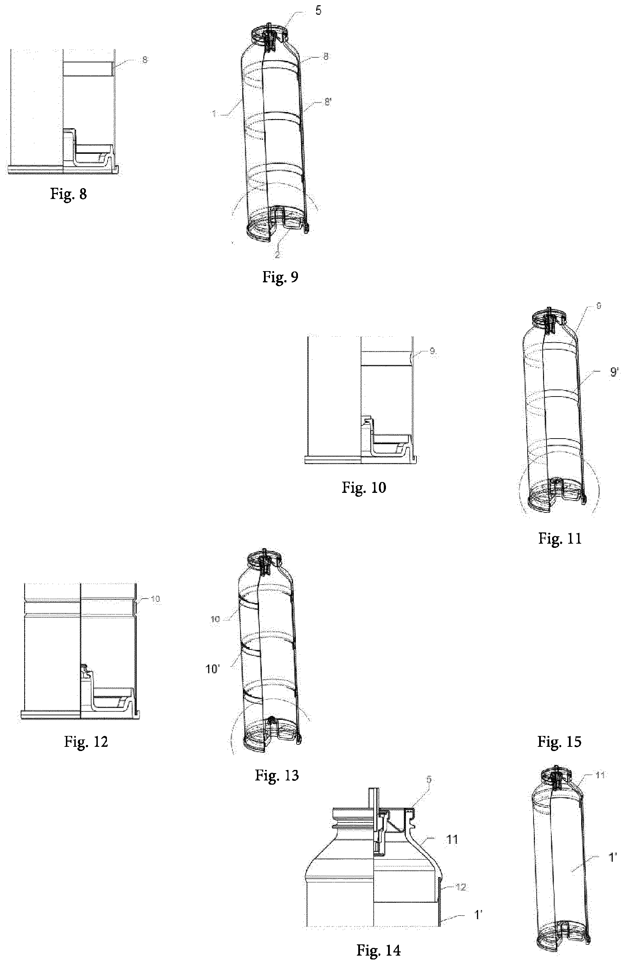

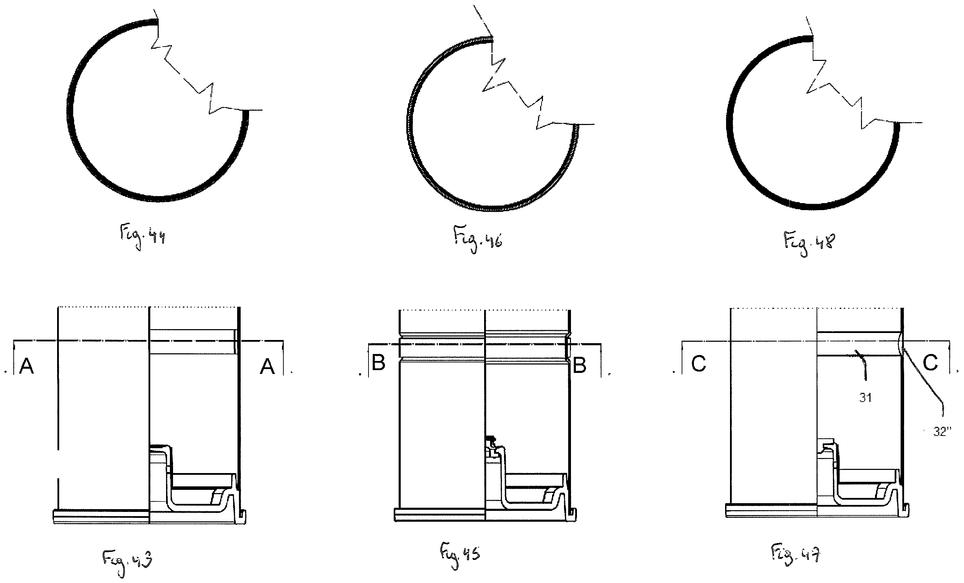

Figures 1 to 15 et seq. each show container examples, in each case with variants in several views, full and/or partial views, wherein
Fig. 1 shows a mixed combined view in perspective in partial cross section of the bottom section according to a first example of the container;
Fig. 2 shows a completed side view of the representation of an example of the container represented in Fig. 1;
Fig. 3 shows a similar combined view of an example of the container represented in both preceding Fig., but of a top portion thereof;
Fig. 4 shows a combined perspective view in partial cross-section of the bottom section of a second example of the container;
Fig. 5 shows a similar side view as the representation in Fig. 2, of the example of the container represented in Fig. 4;
Fig. 6 shows a similar view as in Fig. 1 but of a third example of the container;
Fig. 7 shows a similar side view of the representation in Fig. 5 of the third example of the container represented in Fig. 4;
Fig. 8 again shows a similar view as in Fig. 2 of a completed side view with regard to the detailed view according to Fig. 1, but of a fourth example of the container;
Fig. 9 shows a further completed mixed side view in perspective of the complete container represented in the preceding Fig., but with a laterally removed longitudinal side portion thereof;
Fig. 10 and 11 show similar views again as in both preceding Fig. 8 and 9, but of a yet additional example of the container;
Fig. 12 and 13 show similar views again as in both Fig. 8 and 9, but of a still further example of the container;
Fig. 14 shows a similar top view as in Fig. 3, but of a still further example of the container, as represented sideways in Fig. 15.

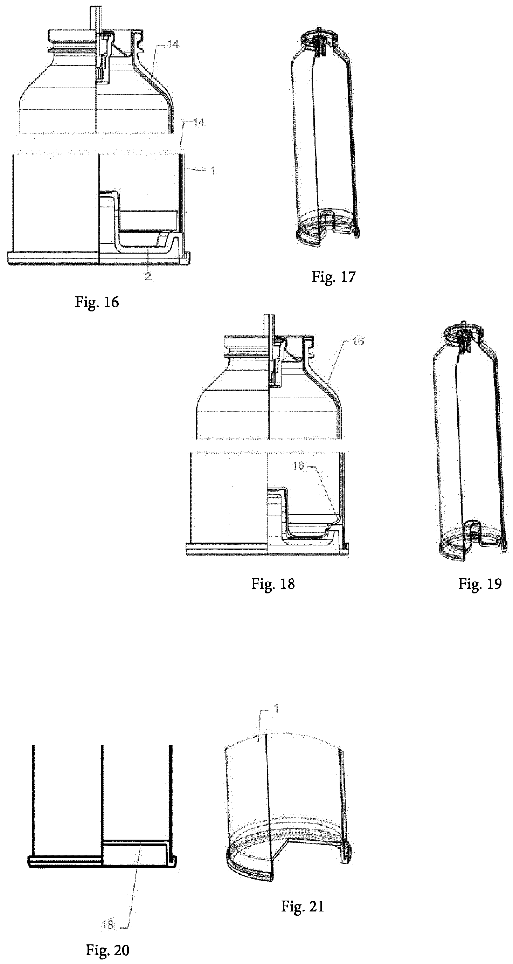

Fig. 16 shows a mixed similar representation of said bottom and top portions as represented in Fig. 2 and 3 respectively, of a still further example of the container;
Fig. 17 is a similar view as in Fig. 15 of the latter example of the container as represented in the preceding Fig. 16;
Fig. 18 and 19 are similar representations of a still additional example of the container as represented in both preceding Fig. 16 and 17, respectively;
Fig. 20 and 21 further represent similar partially cut-away bottom sections as shown in Fig. 5 and 4, respectively, of a yet additional example of the container;
Fig. 22 and 23 are similar representations as in both preceding Fig. 20 and 21, but of an additional example of the container with a multi-chamber system;
Fig. 24 and 25, not part of the claimed invention, are in turn similar views as in both Fig. 9 and 8 respectively provided with a first continuous bottom represented in Fig. 25;
Fig. 26 and 27, not part of the claimed invention, show similar representations as in both preceding Fig. 24 and 25, but with a different bottom finish represented in Fig. 27;

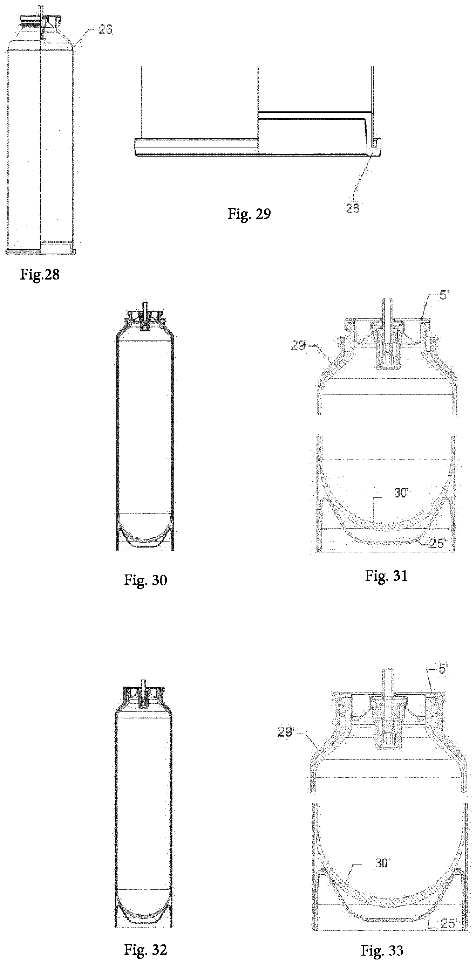

Fig. 28 and 29, not part of the claimed invention show similar representations as in both Fig. 24 and 25, but with yet another floor finish represented in Fig. 29;
Fig. 30, not part of the claimed invention, represents a cross-section of a further example of a container system, not as represented in Fig. 26;
Fig. 31, not part of the claimed invention, is a more detailed enlarged view of the container system represented in the preceding Fig. 30 with the bottom and top portions in exploded view;

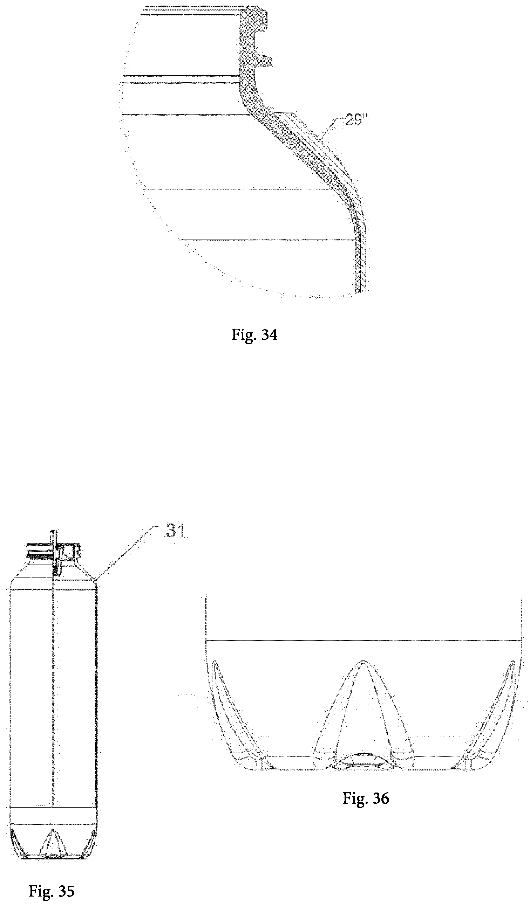

Fig. 32 and 33, not part of the claimed invention, show similar views as Fig. 30 and 31 respectively, but of a still further example of a container system, in which Fig. 34 is an enlarged detail view thereof;
Fig. 35 and 36 show both show similar views as in Fig. 28 and 29 respectively, of a still further example of the container.

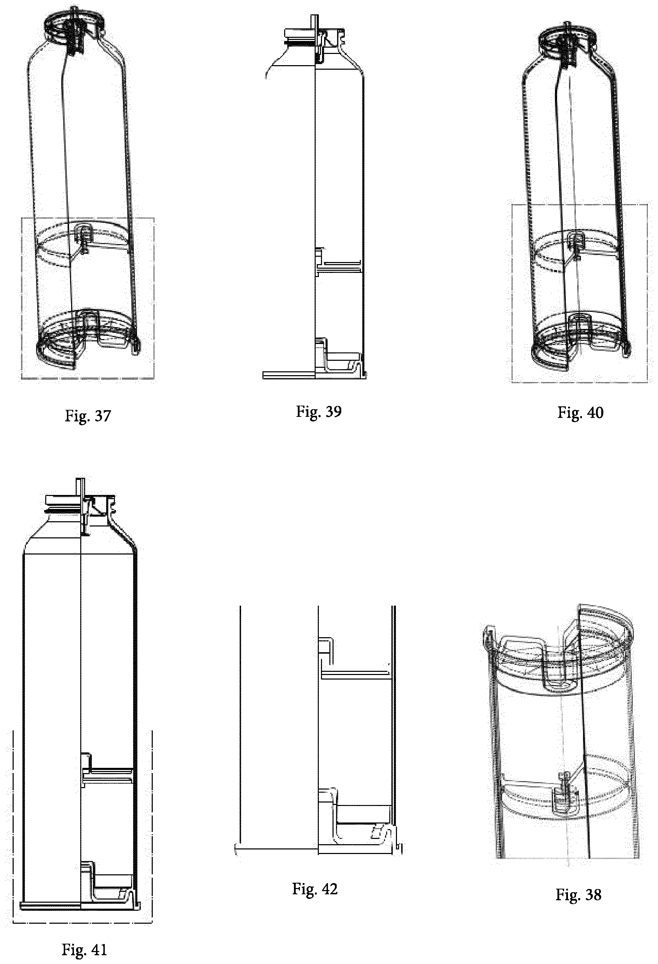

Fig. 37 shows a completed view of a bottle-in-bottle type container system according to an embodiment of the invention, similar to the container represented in Fig. 23 with a two-chamber system, not in a bottle-in-bottle type container system;
Fig. 38 is an enlarged detail view of Fig. 37 similar to Fig. 23;
Fig. 39 shows a partial sectional view of said two-chamber system container as represented in the penultimate Fig. 37;
Fig. 40 shows a container as represented in Fig. 37, but according to an additional embodiment of the invention with double container system;
Fig. 41 is a similar representation as in the fore last Fig. of the double container with multi-chamber system according to the preceding Fig.;
Fig. 42 is an enlarged detail view of Fig. 41 analogous to Fig. 23.
   Finally, Fig. 43 to 48 each show by pair a specific example of particular reinforced container walls useful in the invention, each with different representations of reinforcement elements, each in a sectional view according to lines A-A, B-B and resp. C-C in the respective Fig. 43, 45 and 47.
Fig. 49 represents a summary for synthetic variants of the various examples as set out above;

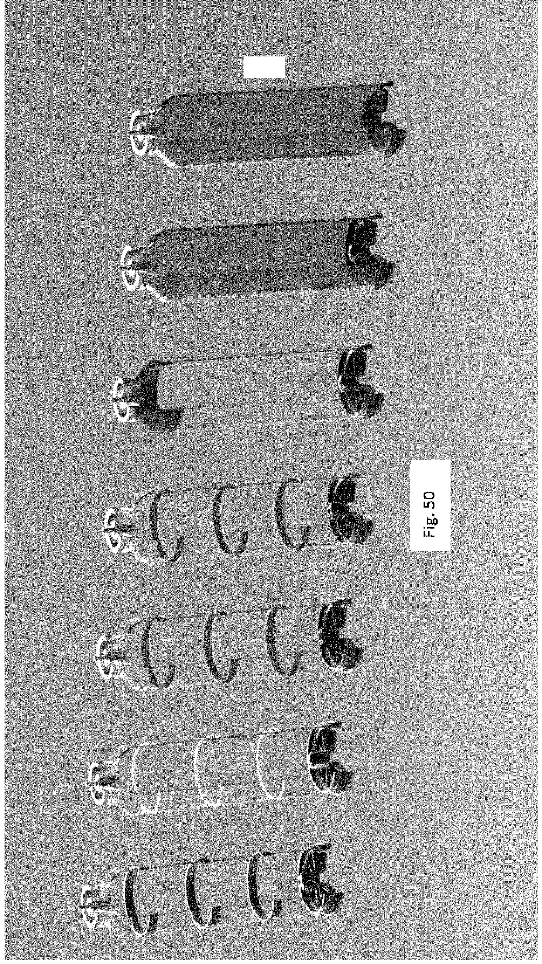

Fig. 50 represents a synthesized realistic view of a series of containers, not according to the invention.

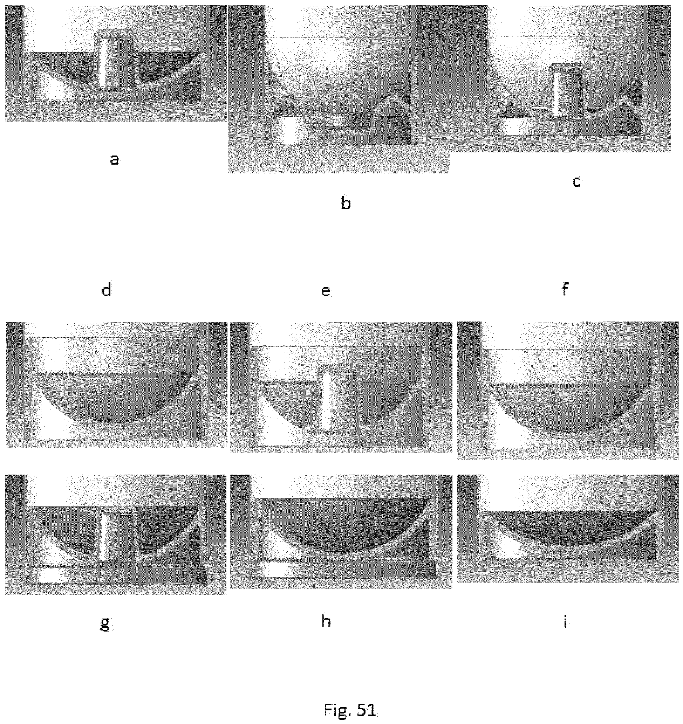

Fig. 51a to i represent a number of synthetic views of bottom portions for containers. A, c, e, g are of use in the invention.

### Description

Figures 1 et seq. each show an embodiment of a container, in each case with variants in several views, full and/or partial views

Generally this invention relates to a pressurised double container system of the bottle-in-botte type acting as a packaging with a top section, a central section and a bottom section, whereof the top section is provided with an opening through which the pressure container can be filled, and wherein a valve or closure can be incorporated, and the packaging is under pressure ranging up to about 20 bar and higher up to 100 bar, or even more up to 300 bar, in particular at a temperature of approx. 55°C.

The bottom section forms a separate component which is disposed at the bottom of the container, while it is provided with a valve in order to pressurise the container. The central section has, for example, a cylindrical or prismatic profile.

The pressure container is sealed at the bottom by a base 2 which is attached by means of a joint 13 to the container 1. The joint 13 can be obtained by means of gluing, seaming or welding. Or it is closed at the bottom by a closing cover base 18. Furthermore, the container 1 is closed with a cover 5, which may be a dosing valve 17 or a screw cap or another closure.

The container thus has a separately fixed base.

The primary container 1 comprises a nearly cylindrical body 22 extending along a longitudinal axis f, a closure 5 at the top and an added base 21, whether or not separated, which may take various shapes as set out below. The cylindrical body 22 is preferably made of plastic, in particular transparent, so that the level of filled product in the container remains visible to the user. This should be understood as comprising translucid, clear or just transparent walls. The particular material that is selected to shape the body 22 must be chemically inert with regard to the filling product comprised in the container, and must furthermore also provide sufficient strength and durability for the intended use, consisting in a pressure packaging of continuous or also discontinuous filling product.

Examples of suitable materials are given below.

The cylindrical or prismatic body can be made by using injection moulding technology or by extrusion, as further described below with the corresponding methods for manufacturing the container. To give the pressure container wall 22 sufficient strength, reinforcement elements are provided at least in the wall 22 of the pressure container. These comprise in the first instance of mechanical reinforcement elements 30, which can advantageously be provided in the form of peripheral reinforcement elements which are arranged around the container mantle wall 22. For a cylindrical wall, they are therefore circular rings which advantageously extend into an area extending perpendicularly to the longitudinal axis ℓ of the container thereby to make optimum use of the reinforcing effect of the ring on the wall.

Preferably, several reinforcing rings are provided along the container wall, which are provided at a mutual distance from one another on the inner and/or outer side respectively of the pressure container, in particular according to an odd number, so that the middlemost ring can thus be appropriately fixed at the mid-height of the container wall 22, which is basically the most solicited area in the container, certainly if the reinforcement rings are provided at an equal distance from one another.

However, the reinforcement rings can also be fixed according to a different longitudinal distribution, particularly with a decreasing distance from the mantle top and. bottom ends towards the central section thereof, wherein the intermediate spaces between consecutive reinforcement rings thus decrease towards the middle of the mantle. Indeed, this produces an increased strength in the most solicited section of the container, i.e. the mid-section.

The reinforcement rings 31advantageously show a rounded profile, particularly with a substantially semi-circular cross section with an outward-pointing top. Thanks to this profile pattern, the local tensions are combined in an optimum manner and are added together to exert a maximum tension in relation to the container wall, so that the tendency thereof to possibly bend or bulge outwardly is thus suppressed.

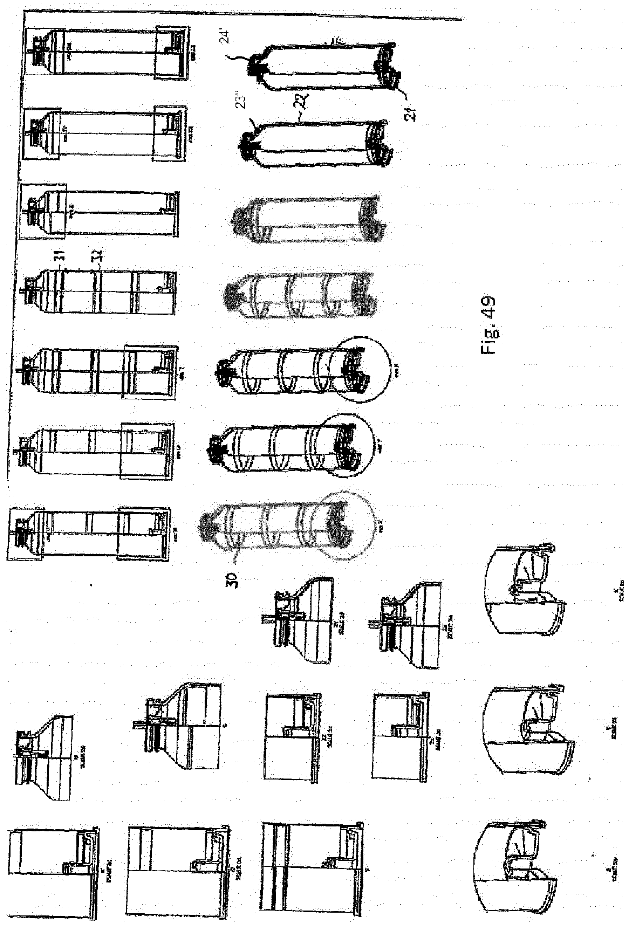

Preferably, the reinforcement rings preferably have a width which remains smaller, preferably even significantly smaller than half, or even less, of the spacing between the consecutive rings as shown in Fig. 49, so that the container wall thickness on average retains a relatively smaller value.

Said reinforcement rings are provided essentially on the outer wall, but can also be fixed to the inner wall, possibly in combination with those on the outer wall, for example in order to ensure the required wall strength, at least at the weaker points hereof.

Other types of ribs, such as longitudinal or radial ribs, are deliberately not used here. The efficiency hereof in terms of the non-deformation of the container wall under the influence of the acting pressure from the inside is at any rate significantly less indeed. Thus, the peripheral reinforcement ribs resp. rings, which extend into an area perpendicular to the longitudinal axis f, are significantly more effective in counteracting a tendency to possible bulging of the container wall under the action of the pressure, which is only slightly or significantly less the case than for the other aforementioned types of reinforcement ribs. These reinforcement elements therefore serve to make the container resistant to high internal pressures. They can also be obtained by wrapping and/or shrinking the film around the container; by a set of inner support rings which are joined to the container.

Alternatively, said reinforcement elements may comprise a set of thickenings resp. reinforcement ribs directly in the material of the container; of a set of outer support rings which can advantageously be fitted directly in the container blowing process; by a mesh and/or a grid and/or a shrink-wrap film into which the grid has already been incorporated.

Possibly, said outer support rings may be made from metal, wherein said outer or inner support rings may be made from plastics as well.

A reinforcement is preferably implemented by inserting an inner container which in turn is attached with a joint to the base, wherein this inner container being under internal pressure is additionally supported by the primary container, wherein it is joined to said primary container by gluing or welding, possibly without a joint. The rings can be attached by gluing or welding.

### example

An example easy to test consists of pressurizing the container, for example at 6 bar at the inside, measuring the deformation and add 2,5 bar along the top, and measuring the deformation again. Then, if said container needs to be able to withstand 6 bar, but if the container above is under 2,5 bar, the latter 2,5 bar pressure can be considered as acting in the opposite direction on the inner container, and consequently the pressure that the inner container has to withstand or that it actually feels about his wall is actually 3,5 bar, i.e. 6-2,5 = 3,5. The main application is that the inner container can be made lighter. Indeed, its wall must thus withstand only 3,5 bar so that the inner container no longer has to withstand 6 bar, resulting in that the walls may be thinner. An additional advantage of the double container thus follows from the application of Pascal's law, where an effect is obtained that a low pressure must be withstood for one of both containers thus involved, which may be quite useful in specific applications. Said inner container is therefore basically mechanically less stressed. This container can then also be made lighter. That is a significant advantage, i.e. that a lighter container can thus be made thanks to the counter-pressure created therein. In this example, the inner container serves as a pressure vessel, wherein the inner container under pressure actually protects its surrounding outer container, thereby actually acting as a counter-container: so said inner container exerts a negative pressure on the base container with a reduced pressure for the latter, i.e. in said double container system with a lower pressure for the one container, under the action of the other container.

In case of a bottle container, the bottle in a bottle is one chamber, wherein the inner bottle serves as an additional reinforcement of the outer bottle. An inner container is thus pressurised via a pressure regulator, whereby two different pressures are now controlled, with the creation of a pressure gradient ΔP, the difference between the inner container and the base container, which has a specific pressure difference, ΔP. By means of this ΔP, said inner container can be made lighter. This is this application of Pascal's law.

In addition to the mechanical reinforcement elements described above, chemical reinforcements may possibly be used as well, as described below. In order to achieve a cumulated reinforcement effect on the container wall, thereby significantly increasing the rigidity in regard to the acting pressure, said chemical reinforcement elements may be used possibly in combination with said mechanical reinforcement elements, resulting in a possible flawless reinforcement of the container wall, despite the pressure acting thereon.

The aim is indeed to pressurise, notably to gas, the packaging with the filling product for packaging under pressure rising to approx. 20 bar and higher to 100 bar, or even more, up to 300 bar, in particular at a temperature of approx. 55°C, which occurs, inter alia, via the closable upper valve 17 and/or the closable lower valve via opening 3, self-closable by means of seal 4, wherein the seal 4 is a small tube made from a flexible plastic; and/or via said self-closable "umbrella plug" 6; or via said two-step "Nichelson plug" 7, both commercially available parts.

In order for the container 1 or 1' to be resistant to high internal pressures, the example consists in reinforcing this container in a variety of ways: by means of inner support rings 8 and 8' which are positioned at a distance from one another and are joined to the container by e.g. gluing or welding. The distance between 8 and 8' and the amount of support rings to be positioned are dependent on the desirable container strength;
and/or by means of thickenings or reinforcement ribs 9 and 9' directly in the material of the container 1. The distance between 9 and 9' and the quantity thereof to be positioned are dependent on the desirable container strength;
and/or by means of external support rings 10 and 10' which are positioned at a distance from one another and are joined by gluing or welding or simply without a joint. The distance between 10 and 10' and the amount of support rings to be positioned are dependent on the desirable container strength. It is possible for these outer support rings 10 to be fixed directly during the container blowing process. The example is not restricted to those outer support rings -the only shown-, but it may also be a mesh or a grid. The materials of these support rings may be both metals and plastics;
and/or by inserting an inner container 14 which in turn is attached with a joint to the base 2. The joint 12 may, for example, be obtained by gluing, seaming or welding. This inner container 14 under internal pressure is then additionally supported by the container 1.

The container packaging 23 has one end opening, i.e. it is not cut off at the bottom, and it is characterized in that it consists of a plastic such as e.g. modified PET, so that it is resistant to high(er) pressure and/or higher temperature. The base at the bottom is hereby designed as substantially flat, possibly with a slight bend towards the inside.

The container packaging 24 with one end opening, i.e. not cut off at the bottom, is remarkable in that it consists of a plastic material, i.e. modified PET, so that it is resistant to high(er) pressures. The base at the bottom is designed here as a hemisphere, because this geometry can withstand more pressure in the container. This embodiment requires a base-cup 25, which enables the packaging to remain standing upright for the sake of the vertical position thereof, and which is attached to the container, particularly at the bottom side thereof, more particularly at the level of the transition area between the base 21 and body 22. The base cup 25 is attached to the container by gluing or welding. The container packaging 24 is not necessarily cylindrical in shape, but may also take other shapes, for example prismatic, in particular triangular with rounded corners.

The container packaging 26 is remarkable in that it is manufactured according to the 3-step process: first a preform injection moulding, then blowing the preform by inflation to a bottle and thereafter cutting it off. The container is closed at the bottom by a full cover 28 which is attached to the container by gluing or welding.

The container packaging 29 is made from a PET material, wherein an inner container 30' is inserted through the opening at the bottom of the outer container 29 produced by said cutting. The inner container 30' is not necessarily made from the same material as the outer container 29 and may have a shape which is not necessarily cylindrical. The lower opening of the outer container 29 is closed via a cover or a base cup 25' which is attached to the container by gluing or welding. The inner container 30' is closed on top with a valve 5'. The wall of the inner container 30' is supported at a higher internal pressure by the outer container, as a result of which the container packaging as such is more resistant to higher pressures up to e.g. 20 bar.

The container packaging 29' is a variant of the outer container 29, wherein the valve 5' is integrated into the container packaging and is therefore no longer removable, shielded from the outside and as additional security for holding the valve through the inner wall of the outer container 29'.

The container packaging 29" is a further variant of the outer container 29 characterized in that the outer container is cut off twice: on the top and at the bottom.

The container packaging 30 has one end opening, i.e. it is not cut off at its bottom, and it is remarkable in that it consists of a plastic, in particular modified PET, so that it is resistant to high(er) pressures.

In the case of atmospheric packaging and/or pressure packaging, the container can be closed with a closing cover base 18, and can whether or not be pressurised according to the methods described above. This is referred to as a 1-chamber system.

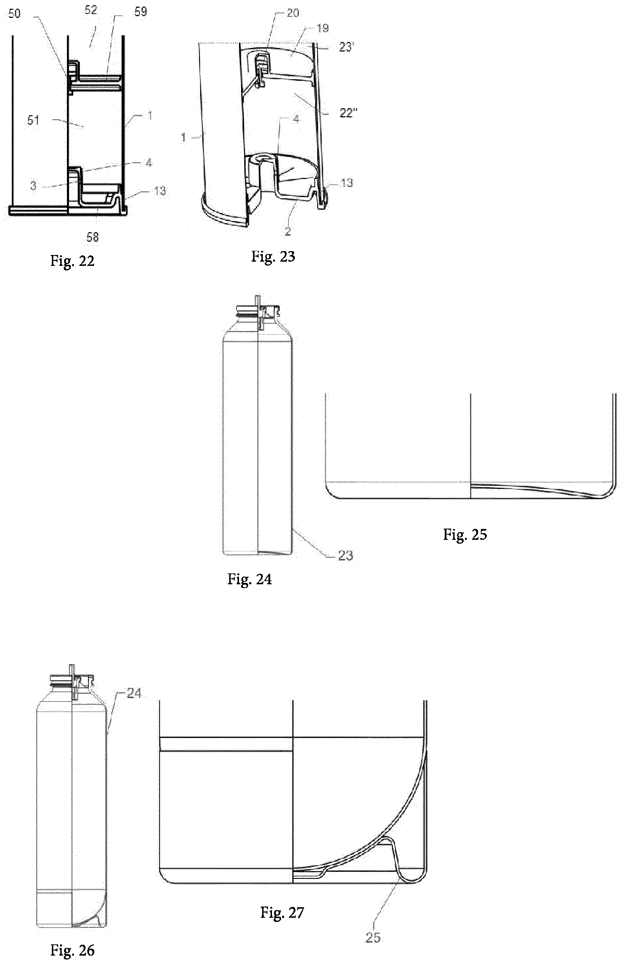

Fig. 22 shows a two-chamber system, wherein the container is closed at the bottom according to the various methods described above, and the two chambers are obtained by fitting a chamber partition 59 in the container. The chamber partition 59 may be provided or not with a pressure control valve 50, but this pressure control valve 50 may, for example, also be a closure which can be opened from outside, so that the contents of the chamber 51 may come into contact with the chamber 52. The chambers may be pressurized or not.

In a three-chamber or multi-chamber system (not shown) according to the description above, one or more chamber partitions 19 are fixed. If only chamber partition 19 is fitted, a third chamber is obtained. The chamber partitions can be provided with a pressure control valve 20 or, for example, a closure which can be opened from outside so that the contents of the chamber 22" come into contact with the chamber 23'. The chambers may be under pressure or not.

A number of chambers can be created by fixing different chamber partitions. In the different chambers, the filling product may consist of liquid, powder or gas. The chambers may be pressurized or not. The pressure packaging can thus be formed by a multi-chamber system consisting of at least two chambers, wherein, in the case of a two-chamber system, the container at the bottom is closed as specified and a chamber partition is fixed in order to create the different chambers in the container. In this case, the chamber partition can be provided with at least one pressure control valve or gassing valve. In particular, this pressure control valve may be a closure which can be indirectly opened from outside by means of the pressure control valve, so that the contents of the one chamber can come into contact with the other chamber, wherein the chambers may be pressurised or may not, possibly wherein both the base and top side are closed by means of the same closing piece, i.e. a closure, particularly wherein this cover consists of a dosing valve, or possibly a screw cap, or other closures.

This embodiment also relates to a pressure packaging multi-chamber system consisting of a container made from plastic, e.g. PET, formed by a one-step or two-step process 1, or a container formed by a one-step or two-step process followed by cutting the container in order thus to obtain a tube. Either a container 1' formed by means of the extrusion process.

The latter is closed at the bottom by a base 2 which is attached by means of a joint 13 to the container 1. The joint 13 may, for example, be obtained by gluing, seaming or welding. Or this is to be closed underneath by a closing cover base 18.

At the top, the container 1 is closed above with a cover 5, wherein this cover may be a dosing valve 17 or a screw cap or other closures.

If the container 1 is produced by means of the extrusion process, then the top side is closed with a container head 11 which is attached by means of a joint 12 to the container 1. The joint 12 may, for example, be obtained by gluing, seaming or welding.

The container head 11 can then in turn be closed with a cover 5, which cover may be a dosing valve 17 or a screw cap or another closure.

In order to prevent a filling product such as liquids, pastes, creams and the like from coming into contact with the outer wall and also with the pressure gas (gases, air, etc.), a flexible inner container 16 is inserted into the container, for example by blowing.

This invention also relates to a method for manufacturing a container packaging, particularly pressure container packaging as specified defined above, wherein the container used herein is formed by a one-step process with subsequent cutting of the container in order thus to obtain a tube, wherein pressure means are arranged herein to pressurise the container packaging with the filling product, particularly from atmosphere to approx. 100 bar, by gassing.

The container may also be formed by a two-step process instead of a one-step process, possibly wherein the container used herein can be formed directly by injection moulding, without cutting.

The pressurisation herein can be done through the closable lower valve via the opening which is self-closable by means of the seal, wherein this seal consists of a tube element which is made from a flexible plastic; particularly wherein the pressurisation herein takes place via the closable upper valve.

According to a particular method for manufacturing a pressure container packaging, the latter is formed by means of the container formed by the extrusion process, or by means of an extruded tube which is cut off at least once, particularly twice, wherein both open ends of the resulting body are closed by the same piece, closure or cover; particularly wherein the upper edge is closed with a container head which is attached to the container by means of a joint, more particularly wherein the container head is in turn closed with a cover, wherein this cover is a dosing valve, or a screw cap or another closure.

To summarise, the main cornerstones which are incorporated into the pressure container system 1 of the claimed invention is a pressure container system of the 'bottle in a bottle' type as reinforcement.

Also disclosed are physical reinforcements, particularly foils, reinforcement rings and/or ribs, internal and/or external slots; and/or chemical reinforcements, particularly by increasing crystallinity, glass transition temperature, polymer blends, including use of PEN and increasing crystallinity; and/or chemical resistance, particularly by means of blends, coatings, including internal coating; and/or special construction types, a 'bag in a bottle', a one-chamber or two-chamber system, or a 'spherical base with base cup'.

## Claims

1. A double container system of the bottle-in-bottle type, which is essentially composed of a plastic polymer, comprising a container and a further inner container, for packaging under pressure of continuum filling products, including fluids, resp. where appropriate discontinuous filling products such as foam, pastes, cream, or also powders, said container (1) comprising a neck part with a pouring opening at its top, a body section (22), which is adjacent thereto and which forms the body of said container (1), and a separate base part (21) that is attached to said container body by means of a joint, and a closure for closing the top section, wherein an inner container is provided in said container (1), which inner container is completely enclosed in said container (1) and which inner container is in turn attached with a joint to said base part (21) of said container (1), thereby forming a double container system wherein the inner container is supported additionally by said container (1); and **characterized in that**
the system is arranged such that said container (1) is placed under a pressure p1 and said inner container is placed under internal pressure p2, wherein both pressures p1 and p₂ are higher than atmospheric pressure, p2 is higher than p1, and the inner container is provided such as to withstand a residual pressure Δp which is equal to the positive difference between the higher pressure p2 in the inner container and the lower counter-pressure p1 in said container (1).

2. Double container system according to claim 1, **characterized in that** the inner container has a smaller wall thickness than said container (1), and is provided to resist to said higher pressure p₂ in the inner container (2'), wherein said double container system thus acts as a buffer with an internally compensated pressure.

3. Double container system according to any one of the claims 1 to 2, **characterized in that** said double container system constitutes a pressure regulator.

4. Double container system according to any one of the preceding claims, **characterized by** a packaging under pressure which is able to withstand pressures of up to 100 bar; preferably up to 20 bar.

5. Double container system according to any one of the preceding claims, **characterized in that** it is provided with a set of physical or mechanical reinforcements (31, 32, 32").

6. Double container system according to any one of both preceding claims, **characterized in that** said reinforcement elements consist in windings around the container wall (22), in particular consisting of glass fibers, composite, or glass wire.

7. Double container system according to claim 6, **characterized in that** it includes chemical reinforcements, in particular in the container wall (22) of said container (1).

8. Double container system according to any one of the preceding claims, in particular the preceding one, **characterized in that** it is transparent, in particular on the container body wall, more particularly at least over a part thereof.

9. Double container system according to any one of the preceding claims, **characterized in that** said plastic material from which it is made consists of a biaxially stretchable material, in particular PET (polyethylene terephthalate).

10. Double container system according to any one of the preceding claims, in particular the preceding one, **characterized in that** said container is coated in and/or out, in particular with acrylates.

11. Double container system according to any one of claims 1 to 10, **characterized in that** said container (1) is provided with a separate base part (21) with a spherical profile in order to allow in the container (1) even more pressure, wherein a base holder (25) is provided.

12. Double container system according to any one of the preceding claims, **characterized in that** a valve is included in the separately added base part (21).

## Patentansprüche

1. Doppelbehältersystem des Flasche-in-Flasche-Typs, das im Wesentlichen aus einem Kunststoffpolymer besteht, umfassend einen Behälter und einen weiteren Innenbehälter, zur Druckverpackung von kontinuierlichen Füllprodukten, einschließlich Fluiden, bzw. gegebenenfalls diskontinuierlichen Füllprodukten, wie etwa Schaum, Pasten, Creme oder auch Pulvern, wobei der Behälter (1) ein Halsteil mit einer Ausgießöffnung an seiner Oberseite, einen sich daran anschließenden Körperabschnitt (22), der den Körper des Behälters (1) bildet, und ein separates Bodenteil (21) umfasst, das mittels eines Gelenks an dem Behälterkörper befestigt ist, und einen Verschluss zum Verschließen des oberen Abschnitts, wobei ein Innenbehälter in dem Behälter (1) vorgesehen ist, wobei der Innenbehälter vollständig von dem Behälter (1) umschlossen ist und wobei der Innenbehälter wiederum mit einem Gelenk an dem Bodenteil (21) des Behälters (1) befestigt ist, wodurch ein Doppelbehältersystem gebildet wird, wobei der Innenbehälter zusätzlich durch den Behälter (1) abgestützt ist; und **dadurch gekennzeichnet, dass** das System so angeordnet ist, dass der Behälter (1) unter einen Druck p1 gesetzt wird und der Innenbehälter unter einen Innendruck p2 gesetzt wird, wobei beide Drücke p1 und p2 höher als der Atmosphärendruck sind, p2 höher als p1 ist und der Innenbehälter vorgesehen ist, um einem Restdruck Δp standzuhalten, der gleich der positiven Differenz zwischen dem höheren Druck p2 im Innenbehälter und dem niedrigeren Gegendruck p1 im Behälter (1) ist.

2. Doppelbehältersystem nach Anspruch 1, **dadurch gekennzeichnet, dass** der Innenbehälter eine geringere Wandstärke als der Behälter (1) aufweist und dazu vorgesehen ist, dem höheren Druck p2 im Innenbehälter (2') standzuhalten, wobei das Doppelbehältersystem somit als ein Puffer mit einem intern ausgeglichenen Druck wirkt.

3. Doppelbehältersystem nach einem der Ansprüche 1 bis 2, **dadurch gekennzeichnet, dass** das Doppelbehältersystem einen Druckregler bildet.

4. Doppelbehältersystem nach einem der vorhergehenden Ansprüche, **gekennzeichnet durch** eine Druckverpackung, die Drücken von bis zu 100 bar; vorzugsweise bis zu 20 bar standhalten kann.

5. Doppelbehältersystem nach einem der vorhergehenden Ansprüche, **dadurch gekennzeichnet, dass** es mit einem Satz physikalischer oder mechanischer Verstärkungen (31, 32, 32") versehen ist.

6. Doppelbehältersystem nach einem der beiden vorhergehenden Ansprüche, **dadurch gekennzeichnet, dass** die Verstärkungselemente aus Wicklungen um die Behälterwand (22) bestehen und besonders aus Glasfasern, einem Verbundwerkstoff oder Glasdraht bestehen.

7. Doppelbehältersystem nach Anspruch 6, **dadurch gekennzeichnet, dass** es chemische Verstärkungen, besonders in der Behälterwand (22) des Behälters (1), einschließt.

8. Doppelbehältersystem nach einem der vorhergehenden Ansprüche, insbesondere dem vorhergehenden, **dadurch gekennzeichnet, dass** es transparent ist, besonders an der Behälterkörperwand, insbesondere zumindest über einen Teil davon.

9. Doppelbehältersystem nach einem der vorhergehenden Ansprüche, **dadurch gekennzeichnet, dass** das Kunststoffmaterial, aus dem hergestellt wird, aus einem biaxial dehnbaren Material, besonders PET (Polyethylenterephthalat), besteht.

10. Doppelbehältersystem nach einem der vorhergehenden Ansprüche, besonders dem vorhergehenden, **dadurch gekennzeichnet, dass** der Behälter innen und/oder außen beschichtet ist, besonders mit Acrylaten.

11. Doppelbehältersystem nach einem der Ansprüche 1 bis 10, **dadurch gekennzeichnet, dass** der Behälter (1) mit einem separaten Bodenteil (21) mit Kugelprofil versehen ist, um noch mehr Druck im Behälter (1) zu ermöglichen, wobei ein Grundhalter (25) vorgesehen ist.

12. Doppelbehältersystem nach einem der vorhergehenden Ansprüche, **dadurch gekennzeichnet, dass** in dem separat angesetzten Bodenteil (21) ein Ventil eingeschlossen ist.

## Revendications

1. Système de double récipient du type bouteille dans bouteille, qui est essentiellement composé d'un polymère plastique, comprenant un récipient et un récipient interne supplémentaire, destiné au conditionnement sous pression de produits de remplissage de continuum, comprenant des fluides, resp. le cas échéant des produits de remplissage discontinus tels que mousse, pâtes, crème, ou encore poudres, ledit récipient (1) comprenant une partie col avec une ouverture de versement au niveau de son sommet, une section de corps (22) qui lui est adjacent et qui forme le corps dudit récipient (1), et une partie base séparée (21) qui est fixée audit corps de récipient au moyen d'un joint, et une fermeture destinée à fermer la section supérieure, un récipient interne étant prévu dans ledit récipient (1), lequel récipient interne est complètement enfermé dans ledit récipient (1) et lequel récipient interne est à son tour fixé avec un joint à ladite partie base (21) dudit récipient (1), formant ainsi un système de double récipient, ledit récipient interne étant supporté en plus par ledit récipient (1) ; et **caractérisé en ce que** le système est agencé de sorte que ledit récipient (1) est placé sous une pression p1 et ledit récipient interne est placé sous une pression interne p2, les deux pressions p1 et p2 étant supérieures à la pression atmosphérique, p2 étant supérieure à p1, et ledit récipient interne étant prévue de façon à résister à une pression résiduelle Δp qui est égale à la différence positive entre la pression supérieure p2 dans le récipient interne et la contre-pression inférieure p1 dans ledit récipient (1).

2. Système de double récipient selon la revendication 1, **caractérisé en ce que** le récipient interne possède une épaisseur de paroi inférieure à celle dudit récipient (1), et est prévu pour résister à ladite pression plus élevée p2 dans le récipient interne (2'), ledit système de double récipient agissant ainsi en tant que tampon avec une pression compensée en interne.

3. Système de double récipient selon l'une quelconque des revendications 1 à 2, **caractérisé en ce que** ledit système de double récipient constitue un régulateur de pression.

4. Système de double récipient selon l'une quelconque des revendications précédentes, **caractérisé par** un emballage sous pression pouvant résister à des pressions allant jusqu'à 100 bars ; de préférence jusqu'à 20 bars.

5. Système de double récipient selon l'une quelconque des revendications précédentes, **caractérisé en ce qu'**il est doté d'un ensemble de renforcements physiques ou mécaniques (31, 32, 32").

6. Système de double récipient selon l'une quelconque des deux revendications précédentes, **caractérisé en ce que** lesdits éléments de renforcement comprennent des enroulements autour de la paroi (22) de récipient, notamment constitués de fibres de verre, de composite ou de fil de verre.

7. Système de double récipient selon la revendication 6, **caractérisé en ce qu'**il comprend des renforcements chimiques, notamment dans la paroi (22) de récipient dudit récipient (1).

8. Système de double récipient selon l'une quelconque des revendications précédentes, notamment la précédente, **caractérisé en ce qu'**il est transparent, notamment sur la paroi de corps de récipient, plus particulièrement au moins sur une partie de celle-ci.

9. Système de double récipient selon l'une quelconque des revendications précédentes, **caractérisé en ce que** ladite matière plastique à partir de laquelle il est réalisé comprend un matériau étirable de manière biaxiale, notamment en PET (polytéréphtalate d'éthylène).

10. Système de double récipient selon l'une quelconque des revendications précédentes, notamment la précédente, **caractérisé en ce que** ledit récipient est revêtu intérieurement et/ou extérieurement, notamment d'acrylates.

11. Système de double récipient selon l'une quelconque des revendications 1 à 10, **caractérisé en ce que** ledit récipient (1) est doté d'une partie base séparée (21) avec un profil sphérique afin de permettre une pression encore plus élevée dans le récipient (1), un support de base (25) étant prévu.

12. Système de double récipient selon l'une quelconque des revendications précédentes, **caractérisé en ce qu'**une soupape est comprise dans la partie base ajoutée séparément (21).
